# EUROPEAN PATENT SPECIFICATION

(11) **EP 2 574 023 B1**
(45) Date of publication and mention of the grant of the patent: **28.03.2018**
(21) Application number: 11182586.5
(22) Date of filing: 23.09.2011
(51) Int. Cl.: H04M 1/725, H04W 52/02, H04W 48/04, H04W 76/04, H04W 84/18, H04W 88/02

(54) **Mobile wireless communications device for near field communication (nfc) operations and related power savings method**
Mobile drahtlose Kommunikationsvorrichtung für Nahfeldkommunikationsvorgänge und zugehöriges Verfahren zur Energieeinsparung
Dispositif de communication mobile sans fil pour opérations de communication de champ proche et procédé associé d'économie d'énergie

(43) Date of publication of application: 27.03.2013
(73) Proprietor: BlackBerry Limited, Waterloo, ON N2K 0A7 (CA)
(72) Inventor: Hagedorn, J. David, Waterloo, Ontario N2L 3W8 (CA)
(74) Representative: Fennell, Gareth Charles

(56) References cited:
- EP-A1- 2 190 175
- WO-A1-2008/103001

## Description

### Technical Field

This application relates to the field of communications, and more particularly, to mobile wireless communications devices and related methods that use Near Field Communication (NFC).

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

Document EP 2 190 175 discloses an apparatus arranged to operate in a plurality of modes. Each mode is indicative of a relationship with the environment which the apparatus is in, or indicative of the environment which the apparatus is in. The apparatus is further arranged to receive radio signals and to determine, on the basis of said radio signals, the mode of operation of the apparatus.

Document WO 2008/103001 discloses a power control method for an RFID reader in a mobile terminal. The method includes checking a driving mode of a display in a standby mode where no power is supplied to the RFID reader. If the driving mode of the display is a sleep mode, the RFID reader is maintained in the standby mode, and if the driving mode of the display is an operation mode, an RFID menu interface is checked. If the RFID menu interface has no RFID automatic detection function settled therein, the RFID reader is maintained in the standby mode, and if the RFID menu interface has an RFID automatic detection function settled therein, power is supplied to the RFID reader so that the RFID reader is switched to a read mode.

### Brief Description of the Drawings

FIG. 1 is a schematic block diagram of a mobile wireless communications device in accordance with an example embodiment.

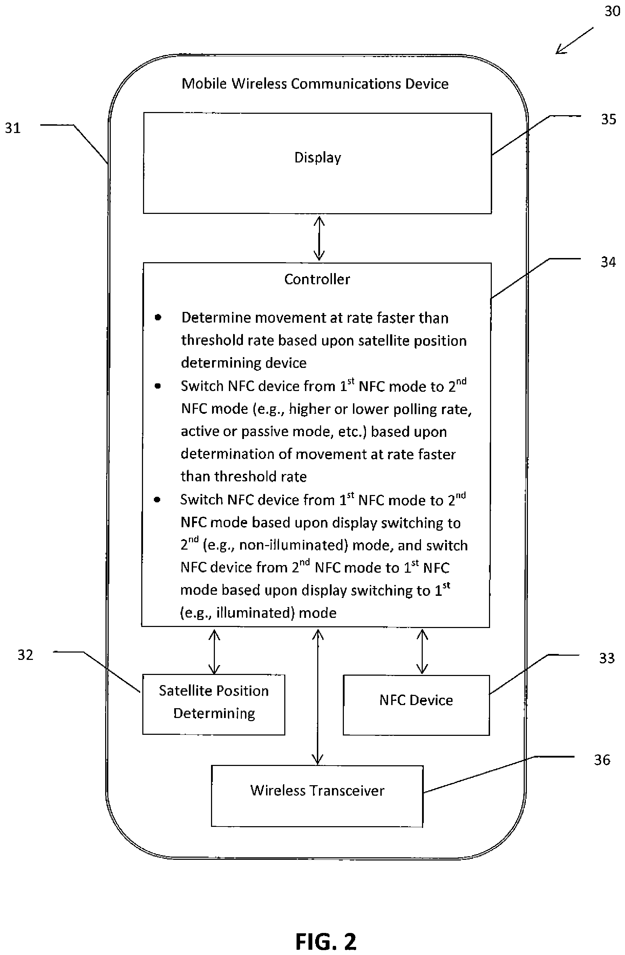

FIG. 2 is a schematic block diagram of the mobile wireless communications device of FIG. 1 in accordance with another example embodiment.
FIG. 3 is a flow diagram illustrating method aspects associated with operation of the mobile wireless communications devices of FIGS. 1 and 2.
FIG. 4 is a schematic block diagram illustrating example components of a mobile wireless communications device that may be used in accordance with the devices of FIGS. 1 or 2.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a mobile wireless communications device is disclosed herein which may include a satellite position determining device, and a near-field communication (NFC) device being switchable between a first NFC mode and a second NFC mode, wherein the second NFC mode provides a lower power consumption by the NFC device compared to the first NFC mode. A controller may also be coupled with the satellite position determining device and the NFC device. The controller may be configured to switch the NFC device from the first NFC mode to the second NFC mode based upon a determination of movement of the mobile wireless communications device at the rate faster than a threshold rate. Accordingly, enhanced power savings may be achieved by selectively switching the NFC device to consume less power when traveling in an automobile, etc., when NFC communication may be less likely to occur.

More particularly, the controller may be further configured to determine a change in movement to a rate below the threshold rate based upon the satellite position determining device, and switch the NFC device from the second NFC mode to the first NFC mode based upon the change in movement to the rate below the threshold rate. Furthermore, the mobile wireless communications device may also include a display carried by the housing and coupled to the controller. The display may be switchable between a first (e.g., an illuminated or bright) display mode and a second (e.g., a non-illuminated or dim) display mode. Moreover, the controller may be further configured to switch the NFC device from the first NFC mode to the second NFC mode based upon the display switching to the second display mode, and to switch the NFC device from the second NFC mode to the first NFC mode based upon the display switching to the first display mode.

In addition, the controller may be further configured to switch the NFC device between the first NFC mode and the second NFC based upon a time of day, a location of the mobile wireless communications device, etc. By way of example, the NFC device may be configured to perform NFC polling at a first rate in the first NFC mode, and to perform NFC polling at a second rate in the second mode, wherein the second rate may be lower than the first rate. Also by way of example, the first NFC mode may comprise an active NFC mode, and the second NFC mode may comprise a passive NFC mode. The mobile wireless communications device may also include a wireless transceiver carried by the portable housing and coupled to the controller.

A related method for operating a mobile wireless communications device, such as the one described briefly above, is also provided. The method may include switching the NFC device from the first NFC mode to the second NFC mode based upon a determination of movement of the mobile wireless communications device at a rate faster than a threshold rate based upon the satellite position determining device.

A computer-readable medium is also provided for a mobile wireless communications device, such as the one described briefly above. The computer-readable medium may have computer-executable instructions for causing the mobile wireless communications device to perform steps comprising switching the NFC device from the first NFC mode to the second NFC mode based upon a determination of movement of the mobile wireless communications device at a rate faster than a threshold rate based upon the satellite position determining device.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

An NFC device, when operating in an active mode, draws power to generate a radio frequency (RF) field when it is searching for other NFC devices or contactless NFC cards/tags in its vicinity. In a mobile wireless communications device (also referred to as a "mobile device" herein) that utilizes a battery as a power source, for example, continuous use of an NFC transceiver of the mobile device in an active mode may result in a significant consumption of battery power, and therefore an undesirable decrease in battery life.

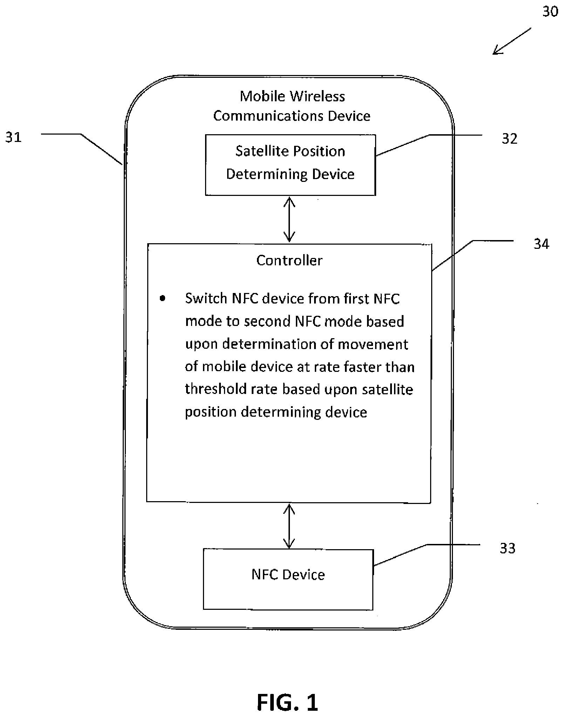

Turning initially to FIG. 1, a mobile device **30** and associated method aspects are now described which may advantageously provide for reduced power consumption from NFC components. More particularly, the mobile device **30** illustratively includes a housing **31,** a satellite position determining device **32** carried by the housing, and an NFC device **33** carried by the housing. Example mobile devices **30** may include portable or personal media players (e.g., MP3 players, video players, etc.), remote controls (e.g., television or stereo remotes, vehicle remotes, etc.), portable gaming devices, portable or mobile telephones, smartphones, tablet computers, electronic readers (e-readers), etc. Also by way of example, the satellite position determining device **32** may comprise a Global Positioning System (GPS) device, although other satellite position determining formats (e.g., GALILEO, GLONASS, etc.) may also be used in some embodiments.

The NFC device **33** may comprise an NFC transceiver and may be switchable between a first NFC mode and a second NFC mode. Generally speaking, the second NFC mode provides a lower power consumption by the NFC device **33** as compared to the first NFC mode, as will be discussed further below.

The mobile device **30** further illustratively includes a controller **34** carried by the housing **31** and coupled with the satellite position determining device **32** and the NFC device **33.** The controller **34** may be implemented using a combination of hardware (e.g., microprocessor, memory, etc.) and software components, such as a computer-readable medium having computer-executable instructions for performing the operations described herein.

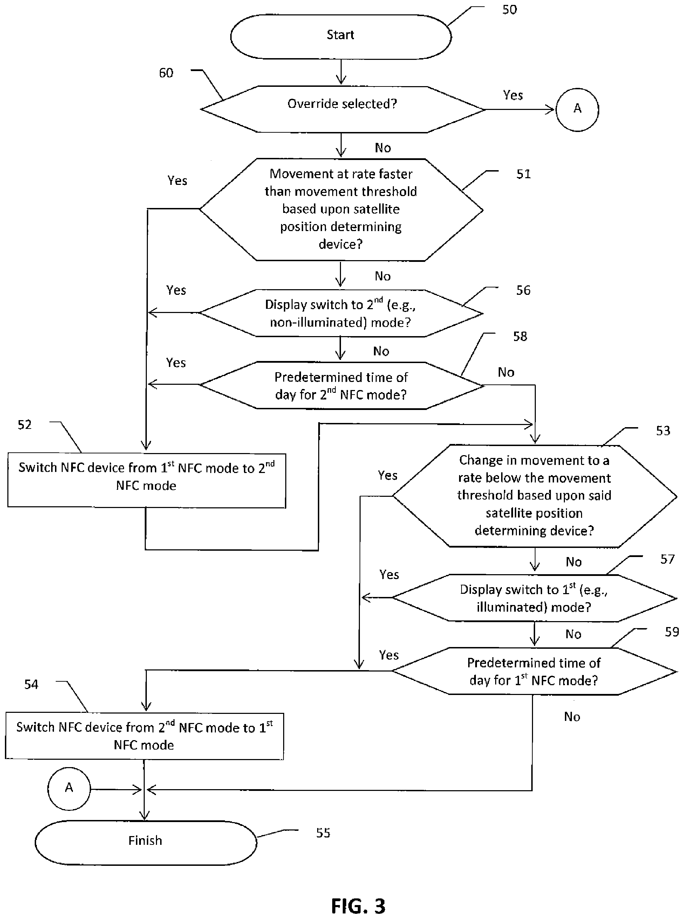

Referring additionally to FIG. 3, beginning at Block **50,** the controller **34** may be configured to determine movement of the mobile device **30** at a rate faster or higher than a movement threshold or threshold rate based upon the satellite position determining device **32,** at Block **51.** By way of example, the movement threshold may be a speed threshold selected to be at a rate faster than a walking pace, which in many circumstances is indicative that NFC communications are unlikely to occur in the short term. For example, if a mobile device is moving at a pace indicative of jogging or bicycle riding, a user may be exercising, for example, in which case it may be unlikely that the mobile device will be needed for NFC communication at that time. Similarly, moving at a speed indicative of vehicle travel may indicate that a user is in an automobile, for example, where NFC communications may also be unlikely to occur. Upon detection of movement of the mobile device **30** at the rate faster than a movement threshold, the controller **34** may advantageously switch the NFC device **33** from the first NFC mode to the second NFC mode, at Block **52.**

In one example implementation, the first NFC mode may be an active mode wherein an RF field is generated continuously or at a given polling rate, and the second NFC mode may be a passive (i.e., not powered) mode where no RF field is generated. In another example implementation, the NFC device **33** may perform polling at a higher frequency in the first NFC mode, and at a lower frequency in the second NFC mode. That is, in this example embodiment both the first NFC mode and second NFC mode may be considered as active modes, yet the polling frequency is lower in the second NFC mode to advantageously provide power savings. By way of example, the second NFC mode may correspond to an NFC low power mode, in which the NFC device **33** cycles on (high power) and off (low power), such as every three seconds, while in the first NFC mode polling occurs at a faster rate (e.g., every one second or less). However, in different embodiments the first and second frequencies may take other values besides those example values set forth herein. As such, the NFC device **33** may advantageously provide desired recognition of other NFC-enabled devices (e.g., NFC tags) without undue delay, yet while still maintaining power savings from relatively low-power operation when moving at or above the movement threshold.

In accordance with another example implementation, the first NFC mode and the second NFC mode may be implemented by setting the active NFC mode "on" or "burst" time to a given or fixed duration, and changing the time between bursts. That is, the controller **34** may cycle the NFC device **33** to an active NFC burst mode with longer or shorter durations therebetween. Generally speaking, the duration of the active mode pulse should be long enough to recognize a load on the electromagnetic field, such as about 60 µs, although other durations may also be used.

The controller **34** may be further configured to determine a change in movement to a rate below the movement threshold based upon the satellite position determining device **32,** at Block **53,** and switch the NFC device **33** from the second NFC mode to the first NFC mode based upon the change in movement to the rate below the movement threshold, at Block **54,** which illustratively concludes the method of FIG. 3 (Block **55**). That is, when movement of the mobile device **30** is below a movement threshold, there may be a higher likelihood that the mobile device will be engaged in NFC communication, so that it is appropriate for the NFC device **33** to be in the first NFC mode for more rapid recognition of other NFC-enabled devices.

It should be noted that in some embodiments hysteresis in switching between the first NFC mode and the second NFC mode may be used. That is, the movement threshold may comprise an upper and a lower threshold, and switching from the first NFC mode to the second NFC mode may occur at the upper threshold, but switching back to the first NFC mode would not occur until the rate of movement falls below the lower threshold. Moreover, other factors may be taken into account by the controller **34** in determining when to switch between the first NFC mode and the second NFC, such as a delay period or time. For example, if the mobile device **30** is moving at a high rate of speed (e.g., highway speeds), and then comes to a stop, it may be that the vehicle the mobile device is traveling in has only momentarily slowed down, such as for a toll booth, etc. The controller **34** may optionally wait for a designated delay period (e.g., one or more minutes, etc.) after the reduced speed is detected before switching the NFC device **33** from the second NFC mode to the first NFC mode. Similarly, another factor that may be considered is a position determined by the satellite position determining device **32.** For example, even if a reduction in speed below the movement threshold is detected, if the current position determined by the satellite position determining device **32** is on a highway, then switching to the first NFC mode may be postponed or overridden.

Detection of movement at a rate faster than the movement threshold may therefore be considered as a "triggering" event for switching from the first NFC mode to the second NFC mode. In some example embodiments, other triggering events may also be used for switching between the first NFC mode and the second NFC mode. By way of example, the mobile device **30** may further include a display **35** and a wireless transceiver (e.g., cellular, Bluetooth, WiMAX, WiFi, etc.) carried by the housing **31** and coupled to the controller **34.** The display **35** may be switchable between a first display mode (e.g., an illuminated or bright mode) and a second display mode (e.g., a non-illuminated of dim mode), which may also be considered as a "sleep" mode. As such, the controller **34** may be further configured to switch the NFC device **33** from the first NFC mode to the second NFC mode based upon the display switching to the second (e.g., non-illuminated) display mode (Block **56**), and to switch the NFC device from the second NFC mode to the first NFC mode based upon the display switching to the first (e.g., illuminated) display mode (Block **57**).

Another example triggering event may be a time of day. More particularly, the controller **34** may be further configured to switch the NFC device **33** between the first NFC mode and the second NFC based upon a time of day (Blocks **58** and **59**), such as at a "sleep" time in the evening or at a "wake-up" time in the morning. Moreover, if movement of the mobile device **30** is detected that is faster than the movement threshold, and it coincides with a particular time of day (e.g., work commute time, etc.), this information may be further used by the controller **34** in determining whether to switch the NFC device **33** between the first NFC mode and the second NFC mode. For example, despite the mobile device **30** slowing to a stop during the morning commute for an extended period (e.g., traffic, accident, etc.), the controller **34** may recognize from the given time of day that the user is likely commuting even though presently at a stop, and therefore not switch from the second NFC mode to the first NFC mode despite the determined speed being below the movement threshold.

In accordance with another example, location information may also be used by the controller **34** in determining whether to switch the NFC device **33** between the first NFC mode and the second NFC mode. For example, if the mobile device **30** is in an automobile, and the automobile slows down on a highway due to a traffic jam, then this location may be used to determine that the mobile device is on a highway and it is unlikely to be swiped with any NFC tags or readers.

In this way, the controller **34** provides a temporary override for mode switching of the NFC device **33.** However, it should be noted that a manual override may also be performed based upon input from another input device, such as a keypad, touch screen, etc., at Block **60.** For example, a user may be traveling on a train where smart-poster NFC tags are present that the user wants to swipe with the mobile device **30.** In such case, the controller may be configured to switch to the first NFC mode based upon a menu selection, actuation of a designated button or key, etc. Input from other devices may also be used for determining whether to switch between the first NFC mode and the second NFC mode, such as an accelerometer, etc., in some example embodiments.

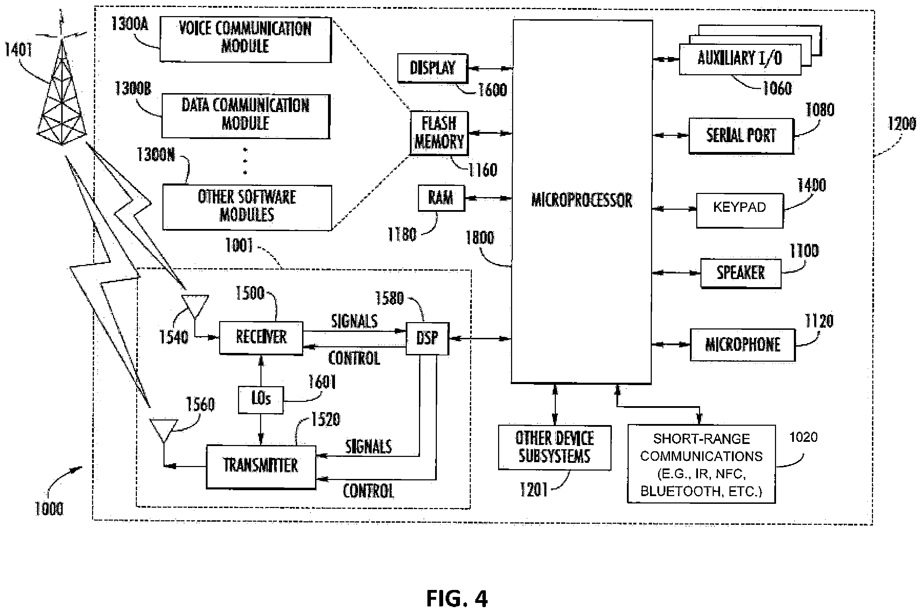

Example components of a mobile wireless communications device **1000** that may be used in accordance with an example embodiment are further described below with reference to FIG. 4. The device **1000** illustratively includes a housing **1200,** a keyboard or a keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 4. These include a communications subsystem **1001; a** short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, NFC or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (30) comprising:
a satellite position determining device (32);
a near-field communication NFC device (33), said NFC device being switchable between a first NFC mode and a second NFC mode, the second NFC mode providing a lower power consumption by said NFC device compared to the first NFC mode; and
a controller (34) coupled with said satellite position determining device and said NFC device, said controller being configured to switch said NFC device from the first NFC mode to the second NFC mode based upon a determination of movement of the mobile wireless communications device at a rate faster than a threshold rate based upon said satellite position determining device;
wherein said NFC device is configured to perform NFC polling at a first rate in the first NFC mode and to perform NFC polling at a second rate in the second NFC mode, and wherein the second rate is lower than the first rate.

2. The mobile wireless communications device (30) of Claim 1 wherein said controller (34) is further configured to determine a change in movement to a rate below the threshold rate based upon said satellite position determining device, and switch said NFC device (33) from the second NFC mode to the first NFC mode based upon the change in movement to the rate below the threshold rate.

3. The mobile wireless communications device (30) of Claim 1 wherein the first NFC mode comprises an active NFC mode.

4. The mobile wireless communications device (30) of Claim 1 wherein the second NFC mode comprises a passive NFC mode.

5. The mobile wireless communications device (30) of Claim 1 further comprising a display (35) coupled to said controller (34); wherein said display is switchable between a first display mode and a second display mode; and wherein said controller is further configured to switch said NFC device (33) from the first NFC mode to the second NFC mode based upon said display switching to the second display mode, and to switch said NFC device from the second NFC mode to the first NFC mode based upon said display switching to the first mode.

6. The mobile wireless communications device (30) of Claim 5 wherein the first display mode comprises an illuminated mode, and wherein the second display mode comprises a non-illuminated mode.

7. The mobile wireless communications device (30) of Claim 1 wherein said controller (34) is further configured to switch said NFC device between the first NFC mode and the second NFC mode based upon a time of day.

8. The mobile wireless communications device (30) of Claim 1 wherein said controller (34) is further configured to switch said NFC device (33) between the first NFC mode and the second NFC mode based upon a location of the mobile wireless communications device.

9. The mobile wireless communications device of Claim 1 further comprising a wireless transceiver (36) coupled to said controller (34).

10. A method for operating a mobile wireless communications device (30) comprising a satellite position determining device (32) and a near-field communication NFC device (33) being switchable between a first NFC mode and a second NFC mode, the second NFC mode providing a lower power consumption by the NFC device compared to the first NFC mode, the method comprising:
switching the NFC device from the first NFC mode to the second NFC mode based upon a determination of movement of the mobile wireless communications device at a rate faster than a threshold rate based upon the satellite position determining device;
wherein the NFC device is configured to perform NFC polling at a first rate in the first NFC mode and to perform NFC polling at a second rate in the second mode, and wherein the second rate is lower than the first rate.

11. The method of Claim 10 further comprising:
determining a change in movement to a rate below the threshold rate based upon the satellite position determining device (32); and
switching the NFC device (33) from the second NFC mode to the first NFC mode based upon the change in movement to the rate below the threshold rate.

12. The method of Claim 10 wherein the first NFC mode comprises an active NFC mode; and wherein the second NFC mode comprises a passive NFC mode.

13. A computer-readable medium for a mobile wireless communications device (30) configured to implement the method of claims 10, 11 or 12.

## Patentansprüche

1. Mobile drahtlose Kommunikationsvorrichtung (30), die Folgendes umfasst:
eine Satellitenpositionsbestimmungsvorrichtung (32);
eine Nahfeldkommunikationsvorrichtung, NFC-Vorrichtung, (33), wobei die NFC-Vorrichtung zwischen einer ersten NFC-Betriebsart und einer zweiten NFC-Betriebsart umschaltbar ist, wobei die zweite NFC-Betriebsart im Vergleich zu der ersten NFC-Betriebsart einen geringeren Leistungsverbrauch der NFC-Vorrichtung bereitstellt; und
eine Steuereinheit (34), die mit der Satellitenpositionsbestimmungsvorrichtung und mit der NFC-Vorrichtung gekoppelt ist, wobei die Steuereinheit konfiguriert ist, die NFC-Vorrichtung anhand einer Bestimmung mittels der Satellitenpositionsbestimmungsvorrichtung einer Bewegung der mobilen drahtlosen Kommunikationsvorrichtung mit einer Rate, die höher als eine Schwellenrate ist, von der ersten NFC-Betriebsart zu der zweiten NFC-Betriebsart umzuschalten;
wobei die NFC-Vorrichtung konfiguriert ist, eine NFC-Abfrage mit einer zweiten Rate in der zweiten NFC-Betriebsart auszuführen, wobei die zweite Rate niedriger als die erste Rate ist.

2. Mobile drahtlose Kommunikationsvorrichtung (30) nach Anspruch 1, wobei die Steuereinheit (34) ferner konfiguriert ist, mittels der Satellitenpositionsbestimmungsvorrichtung eine Änderung der Bewegung zu einer Rate unterhalb der Schwellenrate zu bestimmen und die NFC-Vorrichtung (33) anhand der Änderung der Bewegung zu der Rate unter der Schwellenrate von der zweiten NFC-Betriebsart zu der ersten NFC-Betriebsart umzuschalten.

3. Mobile drahtlose Kommunikationsvorrichtung (30) nach Anspruch 1, wobei die erste NFC-Betriebsart eine aktive NFC-Betriebsart umfasst.

4. Mobile drahtlose Kommunikationsvorrichtung (30) nach Anspruch 1, wobei die zweite NFC-Betriebsart eine passive NFC-Betriebsart umfasst.

5. Mobile drahtlose Kommunikationsvorrichtung (30) nach Anspruch 1, die ferner eine Anzeige (35), die mit der Steuereinheit (34) gekoppelt ist, umfasst; wobei die Anzeige zwischen einer ersten Anzeigebetriebsart und einer zweiten Anzeigebetriebsart umschaltbar ist; und wobei die Steuereinheit ferner konfiguriert ist, die NFC-Vorrichtung (33) anhand des Schaltens der Anzeige zu der zweiten Anzeigebetriebsart von der ersten NFC-Betriebsart zu der zweiten NFC-Betriebsart umzuschalten und die NFC-Vorrichtung anhand des Schaltens der Anzeige in die erste Betriebsart von der zweiten NFC-Betriebsart zu der ersten NFC-Betriebsart umzuschalten.

6. Mobile drahtlose Kommunikationsvorrichtung (30) nach Anspruch 5, wobei die erste Anzeigebetriebsart eine beleuchtete Betriebsart umfasst und wobei die zweite Anzeigebetriebsart eine nicht beleuchtete Betriebsart umfasst.

7. Mobile drahtlose Kommunikationsvorrichtung (30) nach Anspruch 1, wobei die Steuereinheit (34) ferner konfiguriert ist, die NFC-Vorrichtung anhand der Tageszeit zwischen der ersten NFC-Betriebsart und der zweiten NFC-Betriebsart umzuschalten.

8. Mobile drahtlose Kommunikationsvorrichtung (30) nach Anspruch 1, wobei die Steuereinheit (34) ferner konfiguriert ist, die NFC-Vorrichtung (33) anhand eines Ortes der mobilen drahtlosen Kommunikationsvorrichtung zwischen der ersten NFC-Betriebsart und der zweiten NFC-Betriebsart umzuschalten.

9. Mobile drahtlose Kommunikationsvorrichtung nach Anspruch 1, die ferner einen drahtlosen Sender/Empfänger (36), der mit der Steuereinheit (34) gekoppelt ist, umfasst.

10. Verfahren zum Betreiben einer mobilen drahtlosen Kommunikationsvorrichtung (30), die eine Satellitenpositionsbestimmungsvorrichtung (32) und einen Nahfeldkommunikationsvorrichtung, NFC-Vorrichtung, (33), die zwischen einer ersten NFC-Betriebsart und einer zweiten NFC-Betriebsart umschaltbar ist, umfasst, wobei die zweite NFC-Betriebsart im Vergleich zu der ersten NFC-Betriebsart einen geringeren Leistungsverbrauch der NFC-Vorrichtung bereitstellt, wobei das Verfahren Folgendes umfasst:
Schalten der NFC-Vorrichtung von der ersten NFC-Betriebsart zu der zweiten NFC-Betriebsart anhand einer Bestimmung mittels der Satellitenpositionsbestimmungsvorrichtung einer Bewegung der mobilen drahtlosen Kommunikationsvorrichtung mit einer Rate, die höher als eine Schwellenrate ist;
wobei die NFC-Vorrichtung konfiguriert ist, eine NFC-Abfrage mit einer ersten Rate in der ersten NFC-Betriebsart auszuführen und eine NFC-Abfrage mit einer zweiten Rate in der zweiten Betriebsart auszuführen, wobei die zweite Rate niedriger als die erste Rate ist.

11. Verfahren nach Anspruch 10, das ferner Folgendes umfasst:
Bestimmen einer Änderung der Bewegung zu einer Rate unterhalb der Schwellenrate mittels der Satellitenpositionsbestimmungsvorrichtung (32); und
Schalten der NFC-Vorrichtung (33) von der zweiten NFC-Betriebsart zu der ersten NFC-Betriebsart anhand der Änderung der Bewegung zu der Rate unterhalb der Schwellenrate.

12. Verfahren nach Anspruch 10, wobei die erste NFC-Betriebsart eine aktive NFC-Betriebsart umfasst; und wobei die zweite NFC-Betriebsart eine passive NFC-Betriebsart umfasst.

13. Computerlesbares Medium für eine mobile drahtlose Kommunikationsvorrichtung (30), das konfiguriert ist, das Verfahren nach den Ansprüchen 10, 110-der 12 zu implementieren.

## Revendications

1. Dispositif de communications sans fil mobile (30) comprenant :
un dispositif de détermination de position par satellite (32) ;
un dispositif de communication en champ proche NFC (33), ledit dispositif NFC étant commutable entre un premier mode NFC et un second mode NFC, le second mode NFC fournissant une consommation d'énergie inférieure par ledit dispositif NFC comparativement au premier mode NFC ; et
un contrôleur (34) couplé avec ledit dispositif de détermination de position par satellite et ledit dispositif NFC, ledit contrôleur étant configuré pour commuter ledit dispositif NFC du premier mode NFC au second mode NFC sur la base d'une détermination de déplacement du dispositif de communications sans fil mobile à une cadence plus rapide qu'une cadence de seuil sur la base dudit dispositif de détermination de position par satellite ;
dans lequel ledit dispositif NFC est configuré pour effectuer une interrogation NFC à une première cadence dans le premier mode NFC et pour effectuer une interrogation NFC à une seconde cadence dans le second mode NFC, et dans lequel la seconde cadence est inférieure à la première cadence.

2. Dispositif de communications sans fil mobile (30) selon la revendication 1, dans lequel ledit contrôleur (34) est en outre configuré pour déterminer un changement de déplacement à une cadence au-dessous de la cadence de seuil sur la base dudit dispositif de détermination de position par satellite, et commuter ledit dispositif NFC (33) du second mode NFC au premier mode NFC sur la base du changement de déplacement à la cadence au-dessous de la cadence de seuil.

3. Dispositif de communications sans fil mobile (30) selon la revendication 1, dans lequel le premier mode NFC comprend un mode NFC actif.

4. Dispositif de communications sans fil mobile (30) selon la revendication 1, dans lequel le second mode NFC comprend un mode NFC passif.

5. Dispositif de communications sans fil mobile (30) selon la revendication 1, comprenant en outre un afficheur (35) couplé audit contrôleur (34) ; dans lequel ledit afficheur est commutable entre un premier mode d'affichage et un second mode d'affichage ; et dans lequel ledit contrôleur est en outre configuré pour commuter ledit dispositif NFC (33) du premier mode NFC au second mode NFC sur la base de ladite commutation d'affichage vers le second mode d'affichage, et pour commuter ledit dispositif NFC du second mode NFC au premier mode NFC sur la base de la commutation d'affichage vers le premier mode.

6. Dispositif de communications sans fil mobile (30) selon la revendication 5, dans lequel le premier mode d'affichage comprend un mode éclairé, et dans lequel le second mode d'affichage comprend un mode non éclairé.

7. Dispositif de communications sans fil mobile (30) selon la revendication 1, dans lequel ledit contrôleur (34) est en outre configuré pour commuter ledit dispositif NFC entre le premier mode NFC et le second mode NFC sur la base d'une heure de la journée.

8. Dispositif de communications sans fil mobile (30) selon la revendication 1, dans lequel ledit contrôleur (34) est en outre configuré pour commuter ledit dispositif NFC (33) entre le premier mode NFC et le second mode NFC sur la base d'une localisation du dispositif de communications sans fil mobile.

9. Dispositif de communications sans fil mobile selon la revendication 1, comprenant en outre un émetteur-récepteur sans fil (36) couplé audit contrôleur (34).

10. Procédé pour exploiter un dispositif de communications sans fil mobile (30) comprenant un dispositif de détermination de position par satellite (32) et un dispositif de communication en champ proche NFC (33) qui est commutable entre un premier mode NFC et un second mode NFC, le second mode NFC fournissant une consommation d'énergie inférieure par le dispositif NFC comparativement au premier mode NFC, le procédé comprenant :
la commutation du dispositif NFC du premier mode NFC au second mode NFC sur la base d'une détermination de déplacement du dispositif de communications sans fil mobile à une cadence plus rapide qu'une cadence de seuil sur la base du dispositif de détermination de position par satellite ;
dans lequel le dispositif NFC est configuré pour effectuer une interrogation NFC à une première cadence dans le premier mode NFC et pour effectuer une interrogation NFC à une seconde cadence dans le second mode, et dans lequel la seconde cadence est inférieure à la première cadence.

11. Procédé selon la revendication 10, comprenant en outre :
la détermination d'un changement de déplacement à une cadence au-dessous de la cadence de seuil sur la base du dispositif de détermination de position par satellite (32) ; et
la commutation du dispositif NFC (33) du second mode NFC au premier mode NFC sur la base du changement de déplacement à la cadence au-dessous de la cadence de seuil.

12. Procédé selon la revendication 10, dans lequel le premier mode NFC comprend un mode NFC actif ; et dans lequel le second mode NFC comprend un mode NFC passif.

13. Support lisible par ordinateur pour un dispositif de communications sans fil mobile (30) configuré pour mettre en oeuvre le procédé selon les revendications 10, 11 ou 12.
